Europäisches Patentamt

European Patent Office

Office européen des brevets

(19)

(11) Numéro de publication: **0 396 468**

**A1**

(12) ## DEMANDE DE BREVET EUROPEEN

(21) Numéro de dépôt: **90401182.2**

(22) Date de dépôt: **02.05.90**

(51) Int. Cl.⁵: **G01G 13/285, G01G 11/08**

---

Le titre de l'invention a été modifié (Directives relatives à l'examen pratiqué à l'OEB, A-III, 7.3)

(30) Priorité: **05.05.89 FR 8905982**

(43) Date de publication de la demande: **07.11.90 Bulletin 90/45**

(84) Etats contractants désignés: **AT CH DE ES GB IT LI NL SE**

(71) Demandeur: **ERMONT. C.M.**
**Rue Jean-Pierre Timbaud**
**F-42420 Lorette(FR)**

(72) Inventeur: **Marconnet, Guy**
**La Champagnière, Saint Martin La Plaine**
**F-42800 Rive De Gier(FR)**

(74) Mandataire: **Bouget, Lucien et al**
**Cabinet Lavoix 2, Place d'Estienne d'Orves**
**F-75441 Paris Cédex 09(FR)**

---

(54) **Dispositif de régulation du débit de recyclage de matières pulvérulentes dans une installation de fabrication d'enrobés bitumineux.**

(57) Le dispositif comporte une trémie tampon (12) dont l'entrée communique avec la sortie (10) d'un dispositif de dépoussiérage (1). La trémie tampon (12) est supportée par au moins un moyen de pesage (13, 14). La trémie tampon (12) comporte, à son extrémité de sortie, un moyen d'évacuation (15) dont le débit est commandé par un moteur à vitesse variable (18) . Un module de régulation (20) permet de comparer un signal représentatif de la masse de la trémie tampon (12) a une valeur fixe prédéterminée et d'élaborer un signal de commande du moteur (18) , de manière a maintenir constante la quantité de matière pulvérulente contenue dans la trémie tampon (12).

FIG.1

EP 0 396 468 A1

L'invention concerne un dispositif de régulation du débit de recyclage de matières pulvérulentes dans une installation de traitement de matériaux telle qu'une centrale d'enrobage pour la production d'enrobés bitumineux pour revêtements routiers.

Les enrobés bitumineux pour revêtements routiers sont généralement constitués par des agrégats tels que des cailloux mélangés à une certaine proportion de matières à faible granulométrie et recouverts par une couche de bitume.

Les enrobés bitumineux sont généralement produits dans des centrales d'enrobage comportant en particulier un tambour rotatif dans lequel les agrégats sont séchés, chauffés puis malaxés avec le bitume.

Le tambour est traversé, dans sa direction axiale, par un flux de gaz chauds provenant d'un brûleur pénétrant par l'une des extrémités du tambour. Les agrégats introduits froids et humides dans le tambour renferment une certaine proportion de matières à fine granulométrie désignées par la suite comme matières pulvérulentes ; une partie des matières pulvérulentes est entraînée par les gaz en circulation dans le tambour, pendant le séchage des agrégats.

Il est nécessaire que les enrobés renferment une quantité minimale définie de matières pulvérulentes, pour présenter des caractéristiques satisfaisantes. On peut donc être amené à introduire, par l'extrémité du tambour, avec les agrégats, des quantités additionnelles de matières pulvérulentes.

Les gaz récupérés à la sortie du tambour et renfermant des matières pulvérulentes doivent être dépoussiérés et épurés avant d'être rejetés à l'atmosphère. Ces gaz sont donc introduits dans un dépoussié reur à sec équipé de filtres à manches ou de dispositifs multicyclones.

Dans le cas des tambours-sécheurs-enrobeurs à courants parallèles dans lesquels les gaz chauds venant du brûleur circulent dans le même sens que les matières solides, la quantité de poussière entraînée par les gaz est relativement faible. On peut prévoir de réintroduire les poussières arrêtées par le dépoussiéreur, dans le tambour, au fur et à mesure de leur récupération à la sortie du dépoussiéreur.

Dans le cas des tambours sécheurs à contre-courant, de type continu ou discontinu, la quantité d'éléments à fine granulométrie entraînés par les gaz est très importante et peut représenter de 4 à 10 % du débit total traversant le tambour. Dans ce cas, il est nécessaire de réintroduire ces éléments fins dans l'installation le plus régulièrement et le plus rapidement possible, pour maintenir un dosage satisfaisant des enrobés en éléments fins.

Les matières pulvérulentes séparées des gaz sont récupérées à la sortie du dépoussiéreur et sont généralement réintroduites dans le tambour. Ces matières pulvérulentes permettent d'ajuster la teneur finale des enrobés en produits à fine granulométrie.

Le recyclage des matières pulvérulentes provenant du dépoussiéreur est généralement réalisé par l'intermédiaire d'une trémie tampon de forme parallélépipédique et d'un dispositif de manutention tel qu'une vis sans fin.

La trémie tampon dont le volume peut être de l ordre de 2 à 4 m³ est disposée à la sortie du dépoussiéreur de manière à recueillir la matière pulvérulente récupérée dans le dépoussiéreur et transportée jusqu'à son extrémité de sortie.

Le dispositif de manutention est alimenté en matière pulvérulente par un dispositif d'évacuation placé à la sortie de la trémie tampon.

Le dispositif d'évacuation de la trémie tampon est généralement constitué par une vis dont la vitesse de rotation variable est régulée en fonction du niveau de matière pulvérulente à l'intérieur de la trémie tampon. On utilise pour celà soit une sonde de niveau effectuant une mesure continue dans une zone d'une certaine étendue soit deux sondes disposées à des niveaux différents. Dans le premier cas, la régulation est effectuée en mesurant la déviation positive ou négative de la mesure par rapport à une valeur de consigne. Dans le second cas, l'une des sondes commande la mise en fonctionnement de la vis d'évacuation de la matière pulvérulente et l'autre sonde commande l'arrêt de la vis d'évacuation.

Les inconvénients des dispositifs suivant l'art antérieur sont dus principalement à leur faible précision, du fait que le niveau de la matière pulvérulente dans la trémie tampon ne permet pas une détermination précise de la masse de matière pulvérulente contenue dans cette trémie.

En effet, du fait de l'angle de talus des fines récupérées dans la trémie tampon, le niveau ne donne pas une image fidèle de la quantité de fines contenues dans la trémie, ce qui influe sur les quantités de fines recyclées. La forme parallélépipédique de la trémie entraîne une vidange préférentielle dans certaines zones et le niveau n'est pas régulier ; il faut utiliser des trémies de grande capacité pour éviter un désamorçage des moyens de vidange de la trémie. Le système d'extraction à vis est en outre peu précis et présente une forte inertie.

La présence d'un volume tampon important crée un déphasage en ce qui concerne la réincorporation des éléments fins. Cet inconvénient est particulièrement sensible lorsqu'on change de formule concernant la composition des enrobés et que la nouvelle formule comporte des différences avec l'ancienne sur le plan de la composition minéralogique.

Les dispositifs selon l'art antérieur sont de plus encombrants, ce qui est particulièrement désavantageux dans le cas des postes mobiles.

Le débit de fines fourni par la vis est imprécis dans la mesure où le contrôle du niveau est lui-même imprécis.

Enfin , les dispositifs suivant l'invention sont peu sensibles aux variations instantanées de débit d'alimentation de la trémie tampon.

Le but de l'invention est donc de proposer un dispositif de régulation du débit de recyclage de matières pulvérulentes dans une installation de traitement de matériaux renfermant une certaine fraction de matières pulvérulentes, telle qu'une centrale d'enrobage, comportant un moyen d'évacuation de gaz contenant des matières pulvérulentes et un dispositif de dépoussiérage des gaz évacués ayant une sortie de matières pulvérulentes débouchant dans une trémie tampon du dispositif de régulation dont la sortie comportant un dispositif d'évacuation communique avec un moyen de manutention pour le recyclage de la matière pulvérulente dans l'installation de traitement, ce dispositif de régulation présentant une grande précision et une grande sensibilité, tout en étant d'une structure simple et d'un faible encombrement permettant un montage facilité en un point de l'installation qui peut être choisi avec une grande souplesse.

Dans ce but, la trémie tampon est supportée par au moins un moyen de pesage et est reliée à la sortie du moyen de dépoussiérage et au moyen de manutention et de recyclage, par des éléments de liaison souple n'exerçant aucune force sur la trémie, le dispositif d'évacuation de la trémie comporte un moteur électrique de commande du débit d'évacuation et le dispositif de régulation comporte de plus un module de régulation électronique relié au moyen de pesage de manière à recevoir un signal d'entrée représentatif de la masse de matières pulvérulentes contenues dans la trémie et comportant des moyens d'élaboration d'un signal de commande du moteur d'évacuation de la trémie tampon, de manière à maintenir la masse de matières pulvérulentes contenues dans la trémie tampon à une valeur fixe prédéterminée.

Afin de bien faire comprendre l'invention, on va maintenant décrire, à titre d'exemple non limitatif, en se référant à la figure jointe en annexe, un mode de réalisation d'un dispositif de régulation suivant l'invention associé à un poste d'enrobage assurant la production d'enrobés bitumineux pour revêtements routiers.

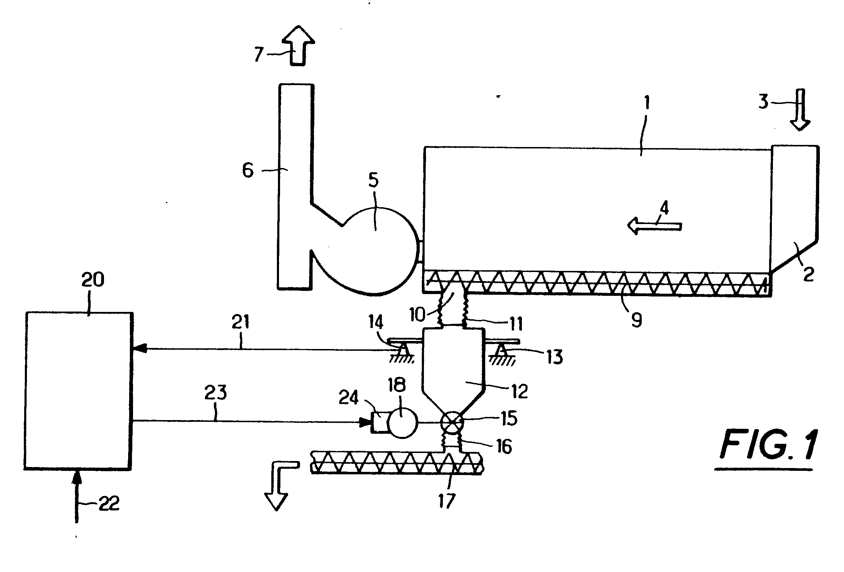

La figure 1 est une vue schématique en élévation de l'ensemble du dispositif de régulation associé au poste d'enrobage

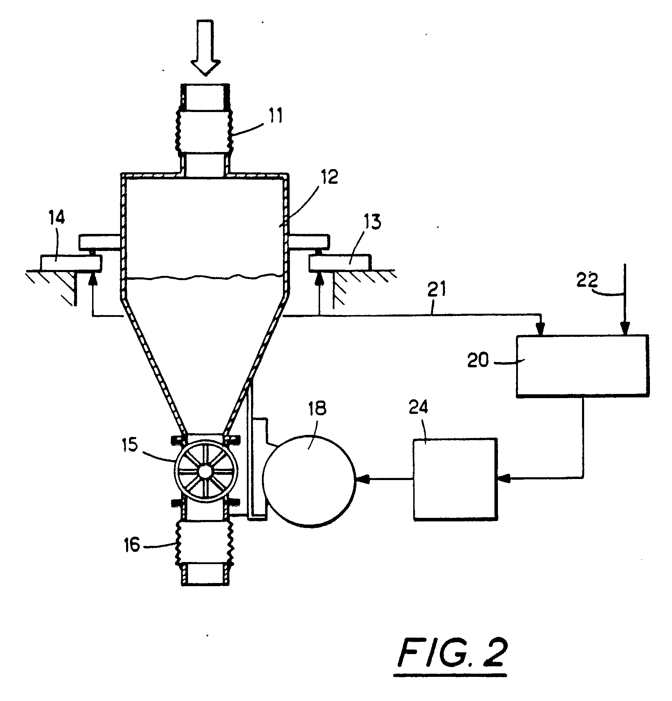

La·figure 2 est une vue à plus grande échelle de la trémie tampon et du module de régulation.

Sur la figure 1, on voit un dépoussiéreur 1 comportant une trémie d'entrée 2 par laquelle pénètre des gaz chargés de matériaux pulvérulents (flèche 3) provenant de la sortie du tambour-sécheur-enrobeur à contre-courant (non représenté) de la centrale d'enrobage.

Le dépoussiéreur 1 est un dépoussiéreur à sec comportant un ensemble de filtres à manches séparant la matière pulvérulente des gaz pendant leur circulation suivant la direction longitudinale du dépoussiéreur (flèche 4). Les gaz sont aspirés à travers le dépoussiéreur 1 par un ventilateur 5 dont l'entrée communique avec la sortie du dépoussiéreur et dont la sortie débouche dans une cheminée 6 d'évacuation des gaz épurés à l'atmosphère (flèche 7).

La matière pulvérulente séparée des gaz lors de leur traversée du dépoussiéreur à sec 1 est récupérée par un dispositif de transport longitudinal 9 placé à la partie inférieure du dépoussiéreur. Ce dispositif de transport peut être constitué, par exemple, par une ou plusieurs vis de transport.

La matière pulvérulente est transportée à l'extrémité postérieure du dépoussiéreur où elle s'écoule, par une ouverture de sortie 10, dans une trémie tampon 12 de forme cylindro-tronconique placée sous le dépoussiéreur.

Comme il est visible sur les figures 1 et 2, la partie supérieure de la trémie tampon 12 est reliée à l'ouverture de sortie 10 du dépoussiéreur par un conduit souple 11.

La trémie tampon 12 repose, par l'intermédiaire d'éléments d'appui tels que 13 et 14, sur un support fixe qui peut être le support du dépoussiéreur 1.

De préférence, l'un des éléments d'appui 13 et 14 porte un axe d'articulation horizontal sur lequel la trémie est montée pivotante et l'autre élément est constitué par un peson sur lequel s'exerce une force d'appui correspondant à la masse totale de la trémie 12.

Les éléments tels que 13 et 14 constituent les seuls moyens d'appui et de support de la trémie tampon 12. Le poids de la trémie et de la matière pulvérulente qu'elle contient s'exerce donc sur le peson, si bien·que l'indication de ce moyen de pesage est représentative de la masse de la trémie contenant du matériau pulvérulent.

La trémie tampon 12 comporte à sa partie inférieure de sortie, un sas alvéolaire 15 constitué par un cylindre comportant des compartiments successifs séparés par des cloisons de direction radiale.

Le sas alvéolaire débouche, à l'opposé de la trémie tampon 12, dans un conduit souple 16 placé à la verticale au-dessus d'un transporteur 17 permettant de renvoyer la matière pulvérulente récupérée à l'entrée du tambour-sécheur-enrobeur.

Le sas alvéolaire 15 est entraîné en rotation par un moteur à vitesse variable 18 permettant d'alimenter le transporteur 17 en matière pulvérulente, avec un débit variable.

Le dispositif de régulation de débit représenté sur les figures 1 et 2 comporte de plus un module de régulation électronique 20 recevant, grâce à une ligne de transmission 21, un signal représentatif des mesures effectuées par le moyen de pesage.

Le signal reçu par le module de régulation électronique 20 est donc représentatif de la masse totale de la trémie tampon 12 contenant une certaine quantité de matière pulvérulente. En effet, la trémie tampon 12 est en appui sur le support fixe du dépoussiéreur, uniquement par l'intermédiaire des moyens tels que 13 et 14. Le conduit souple 11 relié à la sortie 10 du dépoussiéreur n'exerce aucune force sur la trémie et le conduit 16 est totalement libre par rapport au transporteur 17. Aucune force extérieure ne vient donc perturber la mesure de masse effectuée par le dispositif de pesage.

Le module de régulation 20 reçoit également comme donnée d'entrée, par une ligne 22, un signal représentatif d'une masse fixe et prédéterminée correspondant à la masse de la trémie tampon renfermant une quantité bien déterminée de matière pulvérulente.

Le module de régulation 20 comporte des moyens permettant de comparer le signal provenant du peson (13 ou 14) à la valeur de consigne correspondant à une quantité bien déterminée de matière pulvérulente à l'intérieur de la trémie tampon 12.

Le résultat de la comparaison se traduit par un signal de sortie transmis par une ligne 23 à un variateur de commande 24 du moteur à vitesse variable 18.

Le signal de commande transmis par la ligne 23 permet de modifier la vitesse du moteur 18 et donc le débit du sas alvéolaire 15, de manière à maintenir parfaitement constante la quantité de matière pulvérulente contenue dans la trémie tampon 12.

L'action exercée par le signal de commande sur le régulateur 24 du moteur 18 tend donc à annuler la différence entre le signal de mesure du peson sur lequel repose la trémie 12 et le signal correspondant à la valeur de consigne.

La quantité de matière pulvérulente contenue dans la trémie tampon 12 est donc maintenue à une valeur parfaitement constante, quel que soit le débit de matière pulvérulente parvenant à cette trémie, en provenance du dépoussiéreur 1

Le débit du sas alvéolaire 15 correspondant au débit d'évacuation de la matière pulvérulente sur le transporteur 17 est proportionnel à la vitesse de rotation du moteur 18 dans sa plage d'utilisation. Ce débit d'évacuation de la trémie tampon 12 correspondant au débit d'alimentation du transporteur 17 est pratiquement égal au débit de matière pulvérulente fourni par le dépoussiéreur 1.

Les quantités de matière à fine granulomtrie recyclées dans le tambour et amenées à son extrémité d'entrée par le transporteur 17 correspondent donc sensiblement aux quantités de matière fine entraînées par les gaz circulant dans le tambour en cours de fonctionnement. Le déphasage entre la sortie des gaz poussiéreux et le recyclage des éléments fins est maintenu à une valeur très faible grâce aux moyens de régulation électronique.

On stabilise ainsi la composition des enrobés produits, dans la mesure où la quantité de matière pulvérulente recyclée compense la quantité de pulvérulent entraînée par les gaz.

Le dispositif de régulation suivant l'invention présente une grande précision et une grande sensibilité et permet de suivre les variations de débit des matières pulvérulentes provenant du dépoussiéreur, du fait du mode de régulation utilisé et de la faible capacité de la trémie tampon (par exemple de l'ordre de 0,5 m$^3$).

En effet, la trémie tampon peut présenter un faible volume, puisque la quantité pondérale de matières pulvérulentes contenues dans cette trémie tampon est réglée à une valeur prédéterminée, de manière très précise.

Le fonctionnement du dispositif est en outre indépendant de la nature des fines recyclées et de leur comportement lors du stockage en particulier de leur aptitude à l'écoulement et des risques de colmatage.

De plus, le dispositif peut être placé en un point quelconque entre la sortie de matières pulvérulentes du dépoussiéreur à sec et le point de réintroduction de ces matières pulvérulentes dans le tambour-sécheur-enrobeur. On peut en effet concevoir une installation comportant un ou plusieurs transporteurs intermédiaires entre la sortie des matières pulvérulentes du dépoussiéreur à sec et l'entrée de la trémie tampon.

De même, on peut imaginer d'utiliser un ou plusieurs transporteurs intermédiaires entre la sortie de la trémie tampon et le transporteur assurant le recyclage des matières pulvérulentes dans le tambour.

Dans les installations comportant un sécheur équipé d'un dépoussiéreur et un malaxeur, le dispositif suivant l'invention peut être indifféremment intégré au dépoussiéreur ou au malaxeur, du fait de son faible encombrement.

L'invention ne se limite pas au mode de réalisation qui a été décrit.

C'est ainsi que le dispositif de régulation peut être associé à une installation comportant un dépoussiéreur à sec du type multicyclones au lieu d'un dispositif équipé de filtres à manches.

Les moyens de pesage sur lesquels repose la trémie tampon 12 peuvent être d'un type quelconque et ces moyens peuvent être en nombre variable.

On peut utiliser au moins deux pesons constituant les éléments de support 13 et 14. La valeur de la masse totale de la trémie est alors donnée par la somme des valeurs fournies par les pesons 13 et 14.

Le dispositif d'évacuation de la trémie tampon peut être différent d'un sas alvéolaire, dans la mesure où son débit de sortie peut être commandé grâce à un moteur à vitesse variable.

Il est bien évident également que le module de régulation 20 peut être réalisé sous une forme quelconque associant des composants ou circuits électroniques assurant les fonctions de comparaison de signaux et d'élaboration d'un signal de sortie permettant la commande du moteur à vitesse variable.

Enfin, le dispositif de régulation suivant l'invention peut être associé à une installation différente d'un poste d'enrobage et, de manière générale, à toute installation de traitement de matériaux renfermant une certaine fraction de matières pulvérulentes et comportant un moyen d'évacuation de gaz contenant des matières pulvérulentes en suspension.

**Revendications**

1.- Dispositif de régulation du débit de recyclage de matières pulvérulentes dans une installation de traitement de matériaux renfermant une certaine fraction de matières pulvérulentes, telle qu'un poste d'enrobage, comportant un moyen d'évacuation de gaz contenant des matières pulvérulentes et un dispositif de dépoussiérage (1) des gaz évacués ayant une sortie (10) de matières pulvérulentes communiquant avec une trémie tampon (12) du dispositif de régulation dont la sortie comportant un dispositif d'évacuation (15) communique avec un moyen de manutention (17) pour le recyclage de la matière pulvérulente dans l'installation de traitement, caractérisé par le fait que la trémie tampon (12) est supportée par au moins un moyen de pesage (13, 14) et est reliée à la sortie du dispositif de dépoussiérage (1) et au moyen de manutention et de recyclage (17) , par des éléments de liaison souples (11, 16) n'exerçant aucune force sur la trémie (12), que le dispositif d'évacuation (15) de la trémie tampon (12) comporte un moteur électrique (18) de commande du débit d'évacuation et que le dispositif de régulation comporte de plus un module de régulation électronique (20) relié au moyen de pesage (13, 14) de manière à recevoir un signal d'entrée représentatif de la masse de matière pulvérulente contenue dans la trémie (12) et comportant des moyens d'élaboration d'un signal de commande du moteur (18) du dispositif d'évacuation (15) de la trémie tampon (12), de manière à maintenir la masse de matière pulvérulente contenue dans la trémie tampon (12) à une valeur fixe prédéterminée.

2.- Dispositif suivant la revendication 1, caractérisé par le fait que la trémie (12) est articulée sur un axe horizontal porté par un support fixe et repose sur un moyen de pesage (13, 14) également porté par un support fixe sur lequel elle exerce une force représentative de sa masse totale.

3.- Dispositif suivant l'une quelconque des revendications 1 et 2, caractérisé par le fait que la trémie tampon (12) est de forme cylindro-tronconique.

4.- Dispositif suivant l'une quelconque des revendications 1, 2 et 3, caractérisé par le fait que la trémie tampon (12) est placée en-dessous de la sortie (10) du dispositif de dépoussiérage (1) et au-dessus du dispositif de manutention et de recyclage (17) des matières pulvérulentes, la sortie du dispositif de dépoussiérage étant reliée à l'entrée de la trémie tampon (12) par un conduit souple sensiblement vertical.

5.- Dispositif de régulation suivant l'une quelconque des revendications 1, 2, 3 et 4, caractérisé par le fait que le dispositif d'évacuation de la trémie tampon (12) est constitué par un sas alvéolaire (15) de forme cylindrique comportant des compartiments successifs séparés par des cloisons de direction radiale et relié au moteur de commande de débit d'évacuation (18) de manière à être entraîné en rotation autour de son axe.

6.- Dispositif de régulation suivant l'une quelconque des revendications 1 à 5, caractérisé par le fait que le dispositif de dépoussiérage (1) est constitué par un dépoussiéreur à sec d'une centrale d'enrobage dont l'entrée (2) est reliée à la sortie des gaz d'un tambour-sécheur-enrobeur à circulation à contre-courant de production d'enrobés bitumineux pour revêtements routiers.

7.- Dispositif suivant la revendication 6, caractérisé par le fait que le moyen de manutention (17) est constitué par un transporteur joignant la sortie de la trémie tampon (12) à l'entrée du tambour-sécheur-enrobeur.

*FIG.1*

_FIG. 2_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | US-A-4638747 (J.DONALD BROCK ET AL.)<br>* colonne 6, lignes 35 - 60 *<br>* colonne 8, ligne 32 - colonne 9, ligne 2; figure 1 * | 1-7 | G01G13/285<br>G01G11/08 |
| Y | FR-A-2384246 (RHONE-POULENC IND.)<br>* page 1, lignes 1 - 4 *<br>* lignes 18 - 25 *<br>* lignes 31 - 38 *<br>* page 3, lignes 4 - 12; figure 1 * | 1-7 | |
| A | ENGINEERING. (INCL. MACHINE SHOP MAGAZINE)<br>vol. 223, no. 10, octobre 1983, LONDON GB<br>page 792<br>"Electronically-controlled hopper copes with sticky materials"<br>* colonne de droite, alinéa 2; figure * | 1-3 | |
| A | FR-A-2479299 (WIBAU INDUSTRIE UND VERWALTUNG GMBH)<br>* page 5, lignes 16 - 17 *<br>* page 6, lignes 31 - 37 *<br>* page 7, lignes 26 - 30; figure * | 1 | **DOMAINES TECHNIQUES RECHERCHES (Int. Cl.5 )** |
| A | EP-A-33812 (CREUSOT-LOIRE)<br>* page 4, lignes 24 - 32 * | 1 | G01G<br>E01C |
| A | WO-A-8808052 (MARINI S.P.A.)<br>* abrégé *<br>* page 8, ligne 25 - page 9, ligne 4; figure 2 * | 1 | |

Le présent rapport a été établi pour toutes les revendications

| Lieu de la recherche | Date d'achèvement de la recherche | Examinateur |
|---|---|---|
| LA HAYE | 18 JUILLET 1990 | GANCI P.A. |

EPO FORM 1503 03.82 (P0402)